# EUROPÄISCHE PATENTSCHRIFT

(11) **EP 2 201 083 B1**
(45) Veröffentlichungstag und Bekanntmachung des Hinweises auf die Patenterteilung: **16.04.2014**
(21) Anmeldenummer: 08804162.9
(22) Anmeldetag: 12.09.2008
(51) Int. Cl.: C09K 8/36, C09K 8/28

(54) **VERDICKER FÜR ÖLBASIERTE BOHRSPÜLMITTEL**
THICKENERS FOR OIL-BASED DRILLING FLUIDS
ÉPAISSISSANTS POUR FLUIDES DE FORAGE À BASE D'HUILE

(30) Priorität: 14.09.2007 EP 07018088
(43) Veröffentlichungstag der Anmeldung: 30.06.2010
(73) Patentinhaber: Emery Oleochemicals GmbH, 40589 Düsseldorf (DE)
(72) Erfinder: MÜLLER, Heinz, 40789 Monheim (DE); MÄKER, Diana, 40822 Mettmann (DE); HERZOG, Nadja, 41352 Korschenbroich (DE)
(74) Vertreter: Kinkeldey, Daniela
(86) Internationale Anmeldenummer: PCT/EP2008/062201
(87) Internationale Veröffentlichungsnummer: WO 2009/037213

(56) Entgegenhaltungen:
- EP-A- 0 324 887
- EP-A- 0 579 159
- WO-A-03/014253
- DE-A1- 4 102 908

## Beschreibung

Die vorliegende Erfindung betrifft die Verwendung von Additive für ölbasierte Bohrspülungen, wie sie zur Niederbringung von Erdreicherbohrungen on- oder off-shore eingesetzt werden, um Gas- oder Ölvorkommen zu erbohren, und speziell zum Verdicken derartiger Spülungssysteme.

Bohrlochbehandlungsmittel sind alle Arten von Hilfsflüssigkeiten, die bei der Erbohrung von Erdöl- oder Erdgas-Lagerstätten Einsatz finden können. Dabei kommt den so genannten Bohrspülflüssigkeiten und darauf aufgebauten Bohrspülschlämmen oder Bohrspülungen, die sowohl bei landgestützten als auch bei seegestützten Bohrungen Verwendung finden können besondere Bedeutung zu. Bekannt sind einerseits wasserbasierte Bohrspülungen mit einem Gehalt an etwa 1 bis 50% emulgierter Ölphase - neben den anderen üblichen Hilfsstoffen einer solchen Bohrspülung - die auch als O/W-Emulsionsspülungen bezeichnet werden. Auf der anderen Seite sind in breitem Umfang ölbasierte Spülungssysteme im praktischen Einsatz, bei denen das Öl die fließfähige Phase oder doch wenigstens einen substantiellen Anteil der fließfähigen Phase als geschlossene Ölphase bildet. Besondere Bedeutung haben hier die so genannten Invert-Bohrspülschlämme, die auf der Basis W/O-Emulsionen eine disperse wässrige Phase in der geschlossenen Ölphase enthalten. Der Gehalt an disperser wässriger Phase liegt üblicherweise im Bereich von wenigstens etwa 5 bis 10 Gew.% bis zu etwa 50 bis 60 Gew.-%. Neben diesen W/O-Invert-Bohrspülschlämmen sind aber auch die so genannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wässriger Phase dispergiert enthalten.

Die nicht-wässerige Phase derartiger Spülungssysteme wird durch die so genannte Carrier-Fluid gebildet. Es handelt sich dabei ursprünglich um Dieselöl, welches mit bestimmten Additiven versetzt die eigentliche Bohrspülung bildet. Mit Ende der achtziger Jahre kam aber der Bedarf nach umweltfreundlichen Spülungssystemen und somit Carrier-Fluids auf. Diese sollten insbesondere besser biologisch abbaubar sein, als das bislang eingesetzte Dieselöl.

Neben diversen flüssigen Estern, wie sie z.B. in der EP 0 374 672 A1 beschrieben werden, wurden auch olefinische Kohlenwasserstoffe auf ihre Brauchbarkeit hin untersucht. Verwiesen sei hier exemplarisch auf die EP 0 765 368 A1, welche die Verwendung von so genannten alpha-Olefinen als Carrier-Fluid zum Gegenstand hat.

DE 41 02 908 A1 betrifft die Verwendung von Komplexestern als Emulgatoren in fliess- und pumpfähigen Bohrspülungen.

WO 2003/014253 A offenbart eine Invert-Emulsion aus einer öligen kontinuierlichen Phase, einer nicht-ölartigen diskontinuierlichen Phase und einem Tensid.

EP 0 579 159 A offenbart ein Verfahren zur Herstellung von

Polyglycerinfettsäureestergemischen aus einer C8- bis C24-Fettsäure und einem Polyglyceringemisch mit 0 bis 5 Gew.-% Monoglycerin, 15 bis 40 Gew.-% Diglycerin, 30 bis 55 Gew.-% Triglycerin, 10 bis 25 Gew.-% Tetraglycerin und 0 bis 30 Gew.-% höheren Polyglycerinen unter saurer Katalyse.

EP 0 324 887 A offenbart eine mineralölfreie Zusammensetzungen zur Befreiung festgesetzter Bohrgestänge.

Bohrspülungen für den Erdreichaufschluss sind in der Praxis Dispersionen aus einer flüssigen und einer Feststoffphase, wobei bei den Bohrspülungen ein erheblicher Feststoffanteil vorliegt. Es handelt es sich dabei um flüssige Spülsysteme zur Niederbringung von Gesteinsbohrungen unter Aufbringen des abgelösten Bohrkleins. Daher ist es notwendig, dass die Bohrspülungen eine bestimmte Dichte haben (in der Regel größer als 1,2 g/cm³, vorzugsweise größer als 1,5 g/cm³), um ein eventuelles Einbrechen der Formation verhindern zu können. Zu diesem Zweck werden der Spülung Feststoffe zur Beschwerung zugesetzt. In der Regel wird Bariumsulfat verwendet. Derartige Flüssigkeiten zeigen in der Regel unter Scherbelastung ein thixotropes Verhalten, d.h. dass die Viskosität diese auch als nicht-newtonsche Flüssigkeiten bezeichneten Systeme unter dem Einfluss zunehmender Schubspannung oder Schergeschwindigkeit abnimmt. Dieses Verhalten kann in der Praxis dann zu Problemen führen, wenn die Flüssigkeiten transportiert bzw. gepumpt werden sollen und dabei unterschiedlichen mechanischen Belastungen ausgesetzt werden. Außerdem kommen Additive als Verdicker zur Anwendung, welche die Viskosität der Spülung erhöhen um den Abtransport des Bohrkleins zu erleichtern.

Aus dem Stand der Technik ist eine Vielzahl von Additiven bekannt, um die Viskosität von ölbasierten Flüssigkeiten, beispielsweise in Motorenöle oder Schmierstoffe zu erhöhen. In der Regel werden dazu polymer-basierte Verdicker eingesetzt. Beim Einsatz derartiger Additive im Bereich der Bohrspülungen werden aber gesteigerte Anforderungen an diese Verdicker gestellt. Beim praktischen Einsatz einer Bohrspülung verändern sich deren rheologische Eigenschaften kontinuierlich, beispielsweise durch die Art und Menge des Bohrkleins ("cuttings") oder durch Flüssigkeits- oder Gaseinbrüche aus der das Bohrloch umgebenden Gesteinsformation. Die Additive müssen außerdem in einem breiten Temperaturbereich flüssig sein, wobei insbesondere solche Additive gesucht werden, die auch bei niedrigen Temperaturen von deutlich unter 0° C noch einsatzfähig sind. Natürlich darf der Einsatz dieser Additive die Stabilität des Bohrspülsystems nicht beeinflussen. Weiterhin sollten die Additive sehr hohen Drücken bzw. Scherbelastungen standhalten und die Anforderungen an biologische Abbaubarkeit, die in zunehmendem Maße an derartige Systeme gestellt werden erfüllen. Insbesondere dürfen die Bohrspülung und die Additive, die diese enthält, nicht toxisch sein, wobei diese insbesondere für marine Lebensformen gilt, da die Spülungen vorzugsweise bei off-shore Bohrungen verwendet werden.

Die Aufgabe der vorliegenden Erfindung bestand darin, geeignete Verdicker für ölbasierte Bohrspülungen zur Verfügung zu stellen.

Gegenstand der Erfindung ist die Verwendung von Oligoglycerinfettsäureester, hergestellt aus einer Säurekomponente (a), ausgewählt aus
(a1) Fettsäuren der allgemeinen Formel (I)

   R-COOH (I)

   in der R für einen gesättigten oder ungesättigten, verzweigten oder linearen Alkyl- oder Alkenylrest mit 7 bis 21 C-Atomen steht, und/oder
(a5) Hydroxyfettsäuren
   und
(b) Oligoglycerinen, oder Alkoxylaten der Oligoglycerine als Verdicker für ölbasierte Bohrspülmitteln, vorzugsweise solche Bohrspülmittel, die eine Wasserphase und eine Ölphase nebeneinander in emulgierter Form enthalten, wobei die Oligoglycerinfettsäureester Tri-, Tetra-, Pentaester oder eine Mischung dieser Ester sind.

Bevorzugt ist die Verwendung von Oligoglycerinfettsäureestem zum Verdicken von ölbasierten Bohrspülmitteln, wobei die Oligoglycerinfettsäureester hergestellt sind aus einer Säurekomponente (a), ausgewählt aus
(a1) Fettsäuren der allgemeinen Formel (I)

   R-COOH (I)

   in der R für einen gesättigten oder ungesättigten, verzweigten oder linearen Alkyl- oder Alkenylrest mit 7 bis 21 C-Atomen steht, und/oder
(a5) Hydroxyfettsäuren
und (b) Oligoglycerinen oder Alkoxylate von Oligoglycerinen, wobei die Oligoglycerinfettsäureester Tri-, Tetra-, Pentaester oder eine Mischung dieser Ester sind.

Die erfindungsgemäß als Verdicker verwendeten Oligoglycerinester zum Verdicken ölbasierten Bohrspülungen sind an sich bekannte Verbindungen, die z.B. durch sauer oder basisch katalysierte Veresterung direkt aus Oligoglycerin mit den jeweiligen Fettsäuren erhalten werden können. Die EP 064 697 A1 beschreibt verschiedene Oligoglycerinester als Gleitmittel für PVC. In dieser Schrift wird auch die Herstellung der Oligolycerinester mittels basischer Katalyse aus Fettsäuren und Poly- bzw. Oligoglycerinen beschrieben. Die Oligoglycerinester (oder kurz "Oligoglyceride") im Sinne der Erfindung sind in der Regel bei Raumtemperatur flüssige Verbindungen, die aus einer Mischung unterschiedlicher Oligoglycerinester bestehen, wobei geringe Mengen an Ausgangstoffen enthalten sein können. Aus der DE 102 52 973 A1 ist bereits bekannt, Oligoglycerinfettsäureester zusammen mit einem ausgewählten Alkylphenolharz zur Verbesserung der Schmlerfähigkeit von Brennstoffölen einzusetzen. Die Oligoglycerinester werden auch als Oligoglycerinfettsäureester oder Oligoglyceride bezeichnet.

Als Säurenkomponente (a) der erfindungsgemäß verwendeten Ester kommen insbesondere die Fettsäuren des Typs (a1) in Frage, die der Formel (I) folgen. Hier seien als bevorzugt genannt die Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren Mischungen, die z.B. technisch bedingt, bei der Druckspaltung von natürlichen Fetten und Ölen, bei der Reduktion von Aldehyden aus der Roelen'schen Oxosynthese anfallen. Bevorzugt sind technische Fettsäuren mit 12 bis 18 Kohlenstoffatomen, wie beispielsweise Kokos-, Palm-, Palmkern- oder Talgfettsäure.

Besonders bevorzugt sind Oligoglycerinester, worin die Fettsäurekomponente (a1) ausgewählt ist aus einfach oder mehrfach ungesättigten, verzweigten oder linearen, vorzugsweise aber linearen Monocarbonsäuren, wobei ungesättigte Vertreter, vorzugsweise die Ölsäure, auch in technischen Qualitäten, besonders bevorzugt ist. Besonders bevorzugt sind solche Oligoglycerinester, die als Fettsäurekomponente lineare, ungesättigte Fettsäuren aufweisen, vorzugsweise solche, die ausschließlich diese Fettsäurekomponente enthalten.

Ebenfalls bevorzugt sind Oligoglycerinester deren Komponente (a1) aus Tallölfettsäuren ausgewählt ist. Tallölfettsäuren enthalten insbesondere Mischungen aus Linolsäure und konjugierte C 18-Fettsäuren (45-65 Gew.-%), Ölsäure (25-45 Gew.-%), Octadeca-5,9,12-triensäure (5-12 Gew.-%) und gesättigte Fettsäuren (1-3 Gew.-%). Neben den Monocarbonsäuren des Typs (a1) sind auch Dimerfettsäuren, Dicarbonsäuren (a2) bzw. oligomere Fettsäuren des Typs (a3) bzw. (a4) geeignet.

Auch Mischungen von Oligoglycerinester, die in Gegenart unterschiedlicher Fettsäurequellen hergestellt worden sind, oder durch Mischung erhalten wurden, sind bevorzugt. Bevorzugt sind unter anderem auch solche Oligoglycerinester, die durch Umsetzung von Oligoglycerinen der Formel (II) mit Fettsäuremischungen, vorzugsweise Mischungen aus gesättigten und ungesättigten Fettsäuren (Typ (a1)) hergestellt worden sind.

Weiterhin können Hydroxyfettsäuren als Komponente (a5) Verwendung finden, wobei z.B. die Ricinolsäure und besonders bevorzugt die Hydroxystearinsäure Vertreter dieses Klasse von Fettsäuren sind.

Die Komponente (b), also die Oligoglycerine im Sinne der vorliegenden Lehre enthalten zwischen 2 und 10 Glycerinmonomeren im Molekül, wobei in Abhängigkeit des Herstellprozesses (z.B. der Reaktionstemperatur oder -zeit bzw. den verwendeten Katalysatoren) Mischungen verschiedener Oligomeren nebeneinander vorliegen. Oligoglycerin als Alkoholkomponente im Sinne der Erfindung ist kommerziell erhältlich. Es können sowohl reine als auch vorzugsweise technische Qualitäten des Oligoglycerins zur Herstellung der erfindungsgemäß zu verwendenden Oligoglyceride eingesetzt werden. Es kann z.B. durch Kondensation von Glycerin, beispielsweise in Gegenwart von basischen Lithiumverbindungen hergestellt werden, wie es in der WO 93/02124 A1 beschrieben wird. Die US 2003/0114316 A1 offenbart Invert-Bohrspülungssysteme, also Mittel die eine Wasser- und Ölphase in Form nebeneinander in emulgierter Form, und zwar als Wasser-in-Öl-Emulsion enthalten, wobei die Ölphase kontinuierlich ist und die Wasserphase die diskontinuierliche Phase darstellt, wobei diese Invert-Systeme entweder Fettsäureester des Di- bzw. Triglycerins oder Ester von Polyglycerinen, jeweils mit Fettsäuren des Schnitts C10-C20 als Emulgatoren enthalten müssen. Die Ester dieser Schrift sind zwingend und ausschließlich Diester dieser C10-C20 Fettsäuren mit Di- oder Triglycerin bzw. Polyglycerinen, wobei namentlich nur das Polyglycerin-2-diisostearat und Polyglycerin-3-diisostearat offenbart werden. Diese Ester dienen nach der Lehre der US 2003/0114316 als Emulgatoren, um die gewünschte Invert-Emulsion herzustellen. Eine verdickende Wirkung solcher Substanzen wird aber in der US-Schrift nicht offenbart.

Die Polyolkomponente (b) der erfindungsgemäßen Ester, also die Oligoglycerine können vorzugsweise mit der folgenden allgemeinen Formel (II) beschreiben werden: 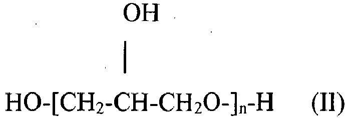 wobei n eine Zahl zwischen 2 und 10 bedeutet. Die Ester folgern dann vorzugsweise der allgemeinen Formel (III): 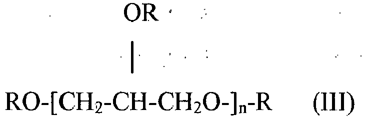 in der n für Zahlen zwischen 2 und 10 steht und R entweder ein Wasserstoffatom oder einen Rest CO-R' darstellt, worin R' dann einen gesättigten oder ungesättigten Alkyl- oder Alkenylrest mit 7 bis 21 C-Atomen repräsentiert, wobei mindesten eine OH-Funktion des Oligoglycerins verestert sein muss. Es kann bevorzugt sein solche Oligoglycerine als Polyolkomponente zu Verwenden, die auf Mischungen von Di- und/oder Triglyceriden basieren. Je nach Qualität der Oligoglycerine können diese zwischen 20 und 45 Gew.-% an Glycerin, zwischen 20 und 40 Gew.-% Diglycerin, zwischen 10 und 20 Gew.-% Triglycerin und zwischen 1 bis 10 Gew.-% an Tetraglycerin sowie zwischen 0,5 bis 5 Gew.-% an Pentaglycerin enthalten.

Die oben gezeigte Formel (III) gibt Oligoglycerinester mit der Säurekomponente (a1) wieder. Sofern Hydroxyfettsäuren (a5) zur Veresterung eingesetzt werden, können die Reste R natürlich auch Alkyl- oder Alkenylreste enthalten die eine oder mehrere freie Hydroxylfunktionen aufweisen.

Neben den Oligoglycerinen können auch deren Alkoxylate, also Umsetzungsprodukte von Oligoglycerinen mit Ethylenoxid und/oder Propylenoxid aber auch Oligomeren von alkoxyliertem Glycerin als Alkoholkomponente für die erfindungsgemäßen Ester eingesetzt werden. Bevorzugt sind hier die ethoxylierten Oligoglycerine.

Die erfindungsgemäßen Oligoglycerinester weisen selbst vorzugsweise Viskositäten von 100 bis 1300 mm²/sec und insbesondere von 150 bis 1200 mm²/sec (jeweils gemessen bei 20 °C) auf.

Die Oliglyceride im Sinne der vorliegenden technischen Lehre stellen daher vorzugsweise Partialester dar, wobei nicht alle freien OH-Funktionen verestert sind. In Abhängigkeit von den Reaktionsbedingungen der Veresterung können aber auch Vollester vorliegen. In der Regel liegen Mischungen der unterschiedlichen Partialester, ggf. in Abmischung mit Vollestern nebeneinander vor. In einer bevorzugten Ausführungsform werden Tri-, Tetra- und/oder Pentafettsäureester von Oligoglycerin bzw. beliebige Mischungen davon als Verdicker für die ölbasischen Bohrspülungen verwendet. Es ist auch bevorzugt, wenn bei der Veresterung das molare Verhältnis von Fettsäuren : Oligoglycerin im Bereich von 5 : 1 bis 1 : 3 liegt, wobei eine besonders bevorzugter Bereich bei einem Molverhältnis von 5 : 1 bis 1 : 1, vorzugsweise 4 : 1 bis 1 : 1 und insbesondere im Bereich von 4 : 1 bis 1,5 : 1 liegt.

Sofern als Fettsäurekomponente Dimerfettsäuren (a2) oder die oligomeren Fettsäuren (a3) zum Einsatz kommen ist der Bereich von Fettsäure zu Oligoglycerin von 1 : 1 bis 1 : 2 besonders bevorzugt.

Weiterhin entspricht es einer bevorzugten Ausführungsform, daß zur Herstellung der Oligoglycerinfettsäureester bei der Veresterung das molare Verhältnis der Zahl der Carboxylgruppen der Säurekomponente zur Zahl der Hydroxygruppen der Polyolkomponente in einem Bereich von 5 : 1 bis 1 : 1, vorzugsweise 4 : 1 bis 1 : 1 und insbesondere im Bereich von 4 : 1 bis 1,5 : 1 liegt. Werden Mischungen mehrerer Säurekomponenten eingesetzt, ist die Zahl der Carboxylgruppen die Summe der Carboxylgruppen aller Säurekomponenten. Werden Mischungen mehrerer Polyolkomponenten eingesetzt, ist die Zahl der Hydroxygruppen die Summe der Hydroxygruppen aller Polyolkomponenten.

Die Oligoglycerinester der Erfindung werden erfindungsgemäß nur als Verdicker in ölbasierten Spülungen eingesetzt. Die Ester führen also zu einer erhöhten Viskosität der jeweiligen Spülung verglichen mit einer nicht additivierten Spülung. Dabei kann dieser Effekt entweder in einer gealterten oder einer nicht-gealterten Spülung, vorzugsweise aber sowohl bei nicht-gealterten wie bei gealterten Systemen auftreten. Erhöhte Viskosität heißt, dass die Viskosität der additivierten Spülung höher ist, als bei einer identischen, aber nicht-additivierten Spülung.

Als ölbasierte Bohrspülungen (OBM = oil based mud) werden dabei im Folgenden solche Systeme verstanden, die mindestens zu mehr als 50 Gew.-% einer Ölphase - bezogen auf die bei Raumtemperatur (21 °C) flüssige Phase des Mittel - enthalten, vorzugsweise zu mehr als 70 Gew.-% und insbesondere zu mehr als 80 Gew.-% und dabei besonders bevorzugt mehr als 90 Gew.-% ein mit Wasser nicht lösliches Öl als flüssige Phase enthalten.

Die vorliegende Lehre umfasst vorzugsweise die Verwendung der Oligoglyceride als Verdicker in Spülungen, die Emulsionen, entweder Wasser-in-Öl (W/O) oder Öl-in-Wasser (O/W) ausbilden, wobei die W/O-Systeme, die auch als Invert-Spülungen bezeichnet werden besonders bevorzugt sind. Die Oligoglycerinester eignen sich bevorzugt zum Verdicken der vorbezeichneten Spülungen. Ölbasierte Spülungssysteme sind solche, bei denen das Öl die fließfahige Phase oder doch wenigstens einen substantiellen Anteil der fließfähigen Phase als geschlossene Ölphase bildet. Besondere Bedeutung haben hier die so genannten Invert-Bohrspülschlämme, die auf der Basis W/O-Emülsionen eine disperse wässrige Phase in der geschlossenen Ölphase enthalten. Der Gehalt an disperser wässriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die so genannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wässriger Phase dispergiert enthalten.

Die Oligoglycerinester gemäß der obigen Beschreibung können entweder alleine oder in Abmischung mit weiteren, vorzugsweise öllöslichen Komponenten in Bohrspülmitteln als verdickendes Additiv verwendet werden. Geeignet und bevorzugt sind dabei Kohlenwasserstoffe, Fettsäureester, Fettsäuren, Fettalkoholen, Tenside, Glycerin, Triglyceride oder Glykole oder beliebige Mischungen dieser Verbindungen. Ganz besonders bevorzugt ist die Mitverwendung von Glycerin. Glycerin kann z.B. bei technischen Oliglyceriden bereits enthalten sein. Bei Mischungen von Oligoglyceriden mit Glycerin sind Mengen an Glycerin von 10 bis 40 Gew.-%, bezogen auf die Mischung aus Oligoglycerin und Glycerin bevorzugt.

Tenside sind ebenfalls geeignete und bevorzugte Zumischkomponenten für die Oligoglycerinester. Dabei können im Prinzip alle Arten von Tensiden, seien es anionische, nichtionischem zwitterionische oder kationische Tenside Verwendung finden. Bevorzugt sind aber die nichtionischen und die anionischen Tenside. Typische Beispiele für anionische Tenside sind Seifen, Alkylbenzolsulfonate, Alkansulfonate, Olefinsulfonate, Alkylethersulfonate, Glycerinethersulfonate, Methylestersulfonate, Sulfofettsäuren, Alkylsulfate, Fettalkoholethersulfate, Glycerinethersulfate, Fettsäureethersulfate, Hydroxy-mischethersulfate, Monoglycerid(ether)sulfate, Fettsäureamid(ether)-sulfate, Mono- und Dialkyl-sulfosuccinate, Mono- und Dialkylsulfosuccinamate, Sulfotriglyceride, Amidseifen, Ethercarbonsäuren und deren Salze. Letztere sind im Sinne der vorliegenden technischen Lehre besonders bevorzugte Tensidkomponenten. Typische Beispiele für nichtionische Tenside sind Fettalkoholpolyglycolether, Alkylphenolpolyglycolether, Fettsäure-polyglycolester, Fettsäureamidpolyglycolether, Fettaminpolyglycolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Polyol-fettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen. Die Tenside sind eine optionaler Bestandteil in den Additiven. Sie werden vorzugsweise in Mengen von 0,01 bis 2 Gew.-%, insbesondere von 0,1 bis 1,5 Gew.% und bevorzugt von 0,2 bis 0,5 Gew.% eingesetzt, jeweils bezogen auf die gesamte Spülung verwendet.

Werden die Oligoglycerinester mit anderen Komponenten zusammen als Additiv verwendet so werden die Oligoglycerinester und die anderen Komponenten vorzugsweise in Gewichtsverhältnissen von 20 : 1 bis 1 : 1, vorzugsweise von 8 : 1 bis 6 : 1 und insbesondere von 5 : 1 bis 1 : 1 zusammen verwendet.

Die Additive (ggf. also nur der Oligolgycerinester alleine bzw. Mischungen unterschiedlicher Oligoglycerinester) werden im Sinne der Erfindung vorzugsweise in Mengen von 10 bis 0,1 Gew.-%, bezogen auf das Gesamtgewicht der Spülung eingesetzt. Vorteilhafte Bereiche sind 5 bis 1 Gew.-%, und insbesondere 3 bis 1,5 Gew.%. Die vorliegende technische Lehre schließt daher auch ein Verfahren zum Verdicken von ölbasischen Bohrspülungen ein, wobei den Spülungen Oligoglyceride in Mengen von 0,1 bis 10 Gew.% zugesetzt werden. Besonders eignen sich hierbei die Oligoglycerinester zum Verdicken der ölbasierten Bohrspülungen.

Die Oligoglycerinfettsäureester können gemäß der Erfindung bevorzugt verwendet werden in Bohrlochbehandlungsmittel, enthaltend eine nicht-wässerigen Ölphase, Beschwerungsmittel, fluid-loss Additive, Salze und ggf. eine wässerige Phase, Emulgatoren, viskositätsregulierende Additive, Netzmittel, Biozide, Korrosionsinhibitoren, und/oder eine Alkalireserve, wobei die nichtwässerige Phase ganz oder teilweise ausgewählt ist aus der Gruppe der
a) Paraffine mit 5 bis 22 C-Atomen und /oder
b) internen Olefine mit 12 bis 30 C-Atomen im Molekül und/oder
c) Carbonsäureestern der allgemeinen Formel R-COO-R, in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet
d) Mineralöle
e) lineare alpha-Olefine (LAOs) mit 12 bis 30 C-Atomen
f) Carbonate
wobei das Bohrlochbehandlungsmittel Additive, die Oligoglycerinester gemäß der obigen Beschreibung enthalten oder aus diesen bestehen in Mengen von 0,1 bis 10 Gew.-%, vorzugsweise in Mengen von 1 bis 5 Gew.-% und insbesondere in Mengen von 1 bis 4 Gew.-% bezogen auf das Gewicht der gesamten Spülung enthält.

Bevorzugt seien können dabei solche Bohrspülungen, deren Dichte der flüssigen Komponente 1,2 bis 3,0 g/cm³ und insbesondere 1,5 bis 3,0 g/cm³ beträgt. Die Ölphasen der erfindungsgemäßen Systeme enthalten die Komponenten a) bis e)) alleine oder die Komponenten a), b), d) oder e) gemeinsam in Abmischung mit Estern c sowie ggf. in Abmischung mit anderen geeigneten Ölphasen. Es sind auch beliebige Mischungen der Ölphasen a) bis e) untereinander möglich.

Ein weiterer Gegenstand der vorliegenden Erfindung betrifft die Verwendung der oben beschriebenen Oligoglycerinester zum Verdicken der oben beschriebenen ölbasierten Bohrlochbehandlungsmittel.

### Komponente a)

Als Komponente a) werden erfindungsgemäß lineare oder verzweigte Paraffine mit 5 bis 22 C-Atomen eingesetzt. Paraffine - korrekter bezeichnet als Alkane - sind bekanntermaßen gesättigte Kohlenwasserstoffe, die für die linearen bzw. verzweigten Vertreter der allgemeine Summenformel CₙH₂ₙ₊₁ folgen. Die cyclischen Alkane folgen der allgemeinen Summenformel CₙH₂ₙ. Besonders bevorzugt sind die linearen und verzweigten Paraffine, wohingegen cyclische Paraffine weniger bevorzugt sind. Insbesondere bevorzugt ist die Verwendung von verzweigten Paraffinen. Weiterhin sind solche Paraffine bevorzugt, die bei Raumtemperatur flüssig sind, also solche mit 5 bis 16 C-Atomen pro Molekül. Es kann aber auch bevorzugt sein Paraffine mit 17 bis 22 C-Atome, die eine wachsartige Konsistenz aufweise einzusetzen. Bevorzugt ist es aber, Mischungen der verschiedenen Paraffine einzusetzen, wobei es besonders bevorzugt ist, wenn diese Mischungen bei 21 °C noch flüssig sind. Solche Mischungen können z.B. aus Paraffinen mit 10 bis 21 C-Atomen gebildet werden. Paraffine sind besonders bevorzugte Ölphasenalleine oder als Mischungsbestandteil mit weiteren Ölphasen - in Bohrspülungen - vorzugsweise solchen des Invert-Typs, in denen die erfindungsgemäßen Oligogylcerinester als Verdicker Verwendung finden.

### Komponente b)

Als Komponente b) sind interne Olefine (im Weiteren als IO abgekürzt) erfindungsgemäß einsetzbar. Dabei sind IO's ebenfalls an sich bekannte Verbindungen, die durch alle dem Fachmann dazu bekannten Verfahren hergestellt werden können. Die EP 0 787 706 A1 beschreibt z.B. ein Verfahren zur Synthese von IOs durch Isomerisierung von Alpha-Olefinen an Sulfon- oder Persulfonsäuren. Charakteristisch ist, dass die so gewonnen IO linear sind und mindestens eine olefinische Doppelbindung enthalten, die sich nicht in der Alpha-Position der Alkylkette befindet. Vorzugsweise werden erfindungsgemäß solche IO beziehungsweise IO-Gemische verwendet, welche IO mit 12 bis 30 C-Atomen im Molekül, vorzugsweise mit 14 bis 24 C-Atomen und insbesondere mit bis zu 20 C-Atomen im Molekül enthalten.

### Komponente c)

Weiterhin sind Ester der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 6 bis 22 C-Atomen bedeutet, Bestandteil der erfindungsgemäßen Ölphasen. Auch derartige Ester sind bekannte chemische Verbindungen. Deren prinzipielle Verwendung in Bohrspülungen ist z.B. Gegenstand der EP 0 374 672 A1 bzw. der EP 0 374 671 A1. Besonders bevorzugt ist die Verwendung solcher Ester deren Rest R für einen gesättigten oder ungesättigten Alkylrest mit 15 bis 25 und R' für einen gesättigten Alkylrest mit 3 bis 10 C-Atomen steht. Die gesättigten Verbindungen sind dabei im Besonderen bevorzugt. Es ist im Rahmen der erfinderischen Lehre bevorzugt dass in der Ölphase neben den Estern gemäß obiger Beschreibung maximal 15 Gew.-% (bezogen die Ölphase) an anderen Estern mit Resten R, die für Alkylreste mit mehr als 23 C-Atomen stehen, enthalten sind.

### Komponente d)

Mineralöle sind eine Sammelbezeichnung für die aus mineralischen Rohstoffen (Erdöl, Braun- und Steinkohlen, Holz oder Torf) gewonnenen flüssigen Destillationsprodukte, die im Wesentlichen aus Gemischen von gesättigten Kohlenwasserstoffen bestehen. Vorzugsweise enthalten die Mineralöle nur geringe Mengen an aromatischen Kohlenwasserstoffen, vorzugsweise weniger als 3 Gew.-%. Bevorzugt sind bei 21 °C flüssige Mineralöle auf Basis von Erdöl. Die Mineralöle weisen vorzugsweise Siedepunkte von 180 bis 300 °C auf.

### Komponente e)

Lineare alpha-Olefine (kurz LAO) sind unverzweigte in 1-Postion ("alpha-C-Atom") ungesättigte Kohlenwasserstoffe. Sie können naturstoffbasiert sein, werden aber insbesondere in großem Umfange auch synthetisch gewonnen. Naturstoffbasierte LAO werden durch Dehydratisierung naturstoffbasierter Fettalkohole als lineare Produkte mit geradkettiger Kohlenstoffzahl gewonnen. Auch die auf synthetischem Wege gewonnenen LAO - hergestellt durch Oligomerisation von Ethylen - enthalten häufig geradkettige Kohlenstoffzahlen in der Kette, es sind heute aber auch Verfahren zur Herstellung von ungradzahligen alpha-Olefinen bekannt. Im Sinne der erfindungsgemäßen Definition weisen - aufgrund ihrer Flüchtigkeit - in der Regel wenigstens 10, vorzugsweise wenigstens 12 bis 14 C-Atome im Molekül auf. Die Obergrenze der bei Raumtemperatur fließfähigen LAO liegt im Bereich von C18-20. Diese Obergrenze ist aber für die Verwertbarkeit dieser Stoffklasse im Rahmen der Erfindung nicht einschränkend. Die Obergrenze geeigneter LAO-Verbindungen für den Einsatz im Rahmen der erfindungsgemäßen Lehre liegt also deutlich über dem zuvor genannten Grenzwert von C18-20 und kann beispielsweise C30 erreichen.

### Komponente f)

Unter Carbonaten werden im Rahmen der vorliegenden Anmeldung Kohlensäureester von Fettalkoholen mit 8 bis 22 C-Atomen verstanden, vorzugsweise die Diester der Kohlensäure. Solche Verbindungen und deren Einsatz als Ölphase für Bohrspülmittel sind beschrieben in der DE 4018228 A1.

Neben den Komponente a) bis f) können noch andere, wasserunlösliche Bestandteile in den Ölphasen enthalten sein, sofern diese ökologisch verträglich sind. Weitere besonders geeignete Mischungsbestandteile der erfindungsgemäßen Ölphasen sind daher im Einzelnen:
(i) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
(ii) Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, wasserunlösliche Ether einwertiger Alkohole mit 6 bis 24 C-Atomen,
(iii) wasserunlösliche Alkohole mit 8 bis 36 C-Atomen
(iv) poly-Alphaolefine (PAO)
(v) Mischungen der Komponente (i) bis (iv)

Als weiteren Bestandteil enthalten die erfindungsgemäßen Bohrspülungen, sofern es sich um solche des Emulsionstyps handelt, Emulgatoren. Bei deren Auswahl kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise Amidoaminverbindungen. Beispiele hierfür werden in der US-PS 4,374,737 und der dort zitierten Literatur beschrieben. Die Emulgatoren zur Ausbildung der Bohrspülung können identisch oder unterschiedlich zu denen sein, die ggf. in den erfindungsgemäßen Additiven selbst eingesetzt werden.

Als Emulgatoren kommen vorzugsweise nichtionische Emulgatoren in Frage, die insbesondere einer der nachfolgenden Stoffklassen zuordnen sind: (Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Alkoxylate der angegebenen Art sind bekanntlich als solche - d.h. mit endständiger freier Hydroxylgruppe am Alkoxylatrest - nicht-ionische Emulgatoren, die entsprechenden Verbindungen können aber auch Endgruppenverschlossen sein, beispielsweise durch Veresterung und/oder Veretherung. Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. Geeignet sind dabei insbesondere auch Verbindungen dieser Art, die zusätzlich in ihre Molekülstruktur (Oligo-)Alkoxyreste und dabei insbesondere entsprechende Oligo-Ethoxyreste einge-bunden enthalten. Die polyfunktionellen Alkohole mit 2 bis 6 OH-Gruppen im Grundmolekül beziehungsweise die sich davon ableitenden Oligomeren können insbesondere Diole und/oder Triole beziehungsweise deren Oligomerisierungsprodukte sein, wobei dem Glykol und dem Glycerin oder ihren Oligomeren besondere Bedeutung zukommen kann. Dem Bereich von Partialethem mehrfunktioneller Alkohole sind auch bekannte nichtionische Emulgatoren von der Art der Ethylen-oxid/Propylenoxid/Butylenoxid-Blockpolymeren zuzuordnen. Ein weiteres Beispiel für entsprechende Emulgatorkomponenten sind Alkyl(poly)glykoside langkettiger Alkohole sowie die bereits benannten Fettalkohole natürlichen und/oder syntheti-schen Ursprungs beziehungsweise Alkylolamide, Aminoxide und Lecithine. Die Mitverwendung heute handelsüblicher Alkyl(poly)glykosid-Verbindungen (APG-Verbindungen) als Emulgatorkomponenten im erfindungsgemäßen Sinn kann u.a. deswegen besonders interessant sein, weil es sich hier um eine Emulgatorklasse besonders ausgeprägter Ökoverträglichkeit handelt. Ohne Anspruch auf Vollständigkeit seien aus den hier aufgezählten Stoffklassen geeigneter Emulgatorkomponenten zusätz-ich die folgenden Vertreter benannt: (Oligo)alkoxylate von Fettalkoholen, Fettsäuren, Fettamine, Fettamide, Fettsäure- und/oder Fettalkoholester und/oder -ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Wie angegeben können die jeweiligen Umsetzungsprodukte auch wenigstens anteilsweise Endgruppen-verschlossen sein. Beispiele für Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen sowie entsprechende Verbin-dungen mit Ethergruppierungen.

Es kann im Sinn der vorliegenden Lehre vorteilhaft sein auf die Verwendung von Difettsäurestern von Polyglycerinen, insbesondere von Polyglycerin-2 bzw -3 distearat oder Difettsäureestern des Di- und/oder Triglycerins mit C10-C20 Fettsäuren in Invertbohrspülungen nach der obigen Beschreibung zu verzichten.

Die Ölphasen der erfindungsgemäßen Mittel weisen vorzugsweise Pourpoints unterhalb 0°C, vorzugsweise unterhalb -5 °C (gemessen nach DIN ISO 3016: 1982-10) auf. Die Brookfield-Viskosität der Ölphasen beträgt bei 0 °C höchstens 50 mPas. Die erfindungsgemäßen Bohrlochbehandlungsmittel weisen, sofern sie als ölbasierte Bohrspülung vom W/O-Typ ausgebildet sind, eine plastische Viskosität (PV) im Bereich von 10 bis 70 mPas und eine Fließgrenze (Yield-Point YP) von 5 bis 60 lb/100 ft^{2,} jeweils bestimmt bei 50 °C, auf. Die kinematische Viskosität der Ölphase gemessen nach Ubbelohde bei 20 °C sollte vorzugsweise höchstens 12 mm²/sec betragen. Die wässerige Phase der erfindungsgemäßen Mittel weist vorzugsweise einen pH-Wert im Bereich von 7,5 bis 12, vorzugsweise von 7,5 bis 11 und insbesondere von 8 bis 10 auf.

Neben den oben aufgeführten Bestandteilen, enthalten die erfindungsgemäßen Mittel noch Additive, beispielsweise Beschwerungsmittel, fluid-loss Additive, weitere viskositäts-regulierende Additive, Netzmittel, Salze, Biozide, Korrosionsinhibitoren, und/oder eine Alkalireserve und Emulgatoren. Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden. Die Additive können wasserlöslich, öllöslich und/oder wasser- bzw. öl-dispergierbar sein.

Klassische Additive können sein: fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B wasserquellbare Tone und/oder Salzschichten - und der z. B. wasserbasierten Spülflüssigkeit, Netzmittel zum besseren Aufziehen der emulgierten Ölphase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Biozide, beispielsweise zur Hemmung des bakteriellen Befalls von O/W-Emulsionen und dergleichen. Nur auszugsweise sei dementsprechend zitiert: Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation. Verdünner zur Viskositätsregulierung: Die so genannten Verdünner können organischer oder anorganischer Natur sein, Beispiele für organische Verdünner sind Tannine und/oder Qebracho- Extrakt. Weitere Beispiele hierfür sind Lignit und Lignitderivate, insbesondere Lignolsulfonate.

### Beispiele

### Herstellung eines Oligoglycerinesters:

924 g (77 Gew.-%) eine technischen Ölsäure (Säurezahl 201,2) wurden mit 276 g (23 Gew.-%) Oligoglycerin (OH-Zahl: 1178) (Gewichtsverhältnis 3,3 : 1) in einem Kessel vermischt und anschließend unter einen Stickstoffatmosphäre aus 240 °C erhitzt. Das frei werden Reaktionswasser wurde destillativ entfernt. Nachdem die Säurezahl des Reaktionsgemisches kleiner als 5 war, wurde der Druck auf 22 mbar reduziert. Danach ließ man das Gemisch auf 90 °C abkühlen. Dann wurden 1 g (1 Gew.-%) Bleicherde (Tonsil^{®}) zugesetzt und das Gemisch anschließend noch ca. 0,5 h gerührt. Es wurden 1080 g einer rotbraunen, klaren Flüssigkeit erhalten.

Es wurden insgesamt 6 verschiedene Glycerinester mit unterschiedlichen Oligoglycerin-komponenten hergestellt:

| Additiv Nr. | Fettsäure | Glycerinkomp¹⁾. | Molverhältnis |
|---|---|---|---|
| (1) | Ölsäure | Oligogylcerin | 4 : 1 |
| (2) | Ölsäure | Oligogylcerin | 84 : 15 |
| (3) | Ölsäure | Oligogylcerin | 2 : 1 |
| (4) | Ölsäure | Oligoglycerin | 3 : 1 |
| (5) | Tallöllfettsäure | Oligoglycerin | 4 : 1 |
| (6) | Ölsäure | Oligoglycerin | 84 : 15 |

| | | | |
|---|---|---|---|
| 1) technische Mischung, enthaltend als Oligoglycerine überwiegend Di- und Triglycerin. | | | |

### Anwendungstechnische Prüfungen

### Beispiel 1

Um die Verdickungswirkung der Oligoglycerinester aufzuzeigen wurden eine Invert-Bohrspülung auf Basis Paraffinöl hergestellt, wobei die Spülung die folgende Zusammensetzung aufwies:

| | | |
|---|---|---|
| Paraffinöl | 262,5 | ml |
| Emulgator | 4,2 | g |
| CaCl - Lsg. (25 Gew.-% in Wasser) | 87,5 | ml |
| Fluid-loss-Additiv | 3,5 | g |
| Strukturbildner | 3,5 | g |
| Bariumsulfat | 280,0 | g |

Das Wasser-Öl-Verhältnis betrug 80 : 20 Vol.-%. Das Spülungsgewicht 14 lb/gal. Als Verdicker wurden zusätzlich 1,8 Gew.-% eines Oligoglycerinesters entweder des Additivs (1) oder des Additivs (2) zugesetzt. Zum Vergleich wurde die Spülung (V) mit der gleichen Menge an einem handelsüblichen Glycerinfettsäuremonoesters (Tallölfettsäuremonoglycerid, erhältlich als OMC 1037 von Cognis Deutschland GmbH) versetzt. Außerdem wurde eine nicht-additivierte Spülung ("blank") gemessen.

Die Messungen der rheologischen Daten erfolgten immer gemäß API bulletin RP 13 B-2. Die Spülungen wurden vor Alterung (before hot rolling = BHR) und nach Alterung bei 250 °F (121 °C) (after hot rolling = AHR) untersucht. Es gelten dabei die folgenden Umrechnungsfaktoren in das SI-System: 1 lbf = 4,448 m kg s; 1 lb in= 0,015 m kg; 1 gal = 3,79 1.

| **Spülung** | | **(1)** | | **(2)** | | **(V)** | | **(Blank)** | |
|---|---|---|---|---|---|---|---|---|---|
| | | BHR | AHR | BHR | AHR | BHR | AHR | BHR | AHR |
| Elektrische | | | | | | | | | |
| Stabilität bei RT | V | 269 | 414 | 313 | 871 | 305 | 286 | 417 | 332 |
| **PV** | cP | 14 | 15 | 13 | 11 | 13 | 13 | 13 | 12 |
| **YP** | lb/100 ft² | 7 | 6 | 8 | 10 | 2 | 3 | 0 | 1 |
| **Gels 10"/10'** | lb/100 ft² | 5/5 | 5/6 | 6/7 | 6/6 | 2/4 | 2/3 | 2/1 | 4/2 |

Es wurden Yieldpoint (YP) und Gelstärke (Gels) nach 10 Sekunden und 10 Minuten gemessen, wobei die erfindungsgemäßen Spülungen (1) und (2) eine vorteilhafte Verdickung zeigten, verglichen mit der nicht additivierten Spülung bzw. mit dem Additiv des Standes der Technik versehenen Spülung (V).

### Beispiel 2

Es wurde eine weitere Invert-Bohrspülung auf Basis Paraffinöl hergestellt, welche die folgende Zusammensetzung aufwies (Öl-Wasser-Verhältnis 70 : 30 Vol.- %, Spülungsgewicht 14 lb/gal):

| | | |
|---|---|---|
| Paraffinöl | 173,6 | ml |
| Wasser | 78,0 | ml |
| Emulgator | 6,0 | g |
| Lime | 1,5 | g |
| Fluid-loss-Additiv | 5,0 | g |
| Calciumchlorid | 27,2 | g |
| Bariumsulfat | 314,0 | g |

Als Verdicker wurden zusätzlich 17,5 g (3,1 Gew.-%) eines Diglycerinesters entweder des Additivs (4), (5) oder des Additivs (6) zugesetzt. Zum Vergleich wurde eine nicht-additivierte Spülung ("blank") gemessen. Die Messungen der rheologischen Daten erfolgten immer gemäß API bulletin RP 13 B-2. Die Spülungen wurden vor Alterung (before hot rolling = BHR) und nach Alterung bei 250 °F (121 °C) (after hot rolling = AHR) untersucht.

| **Spülung** | | **(4)** | | **(5)** | | **(6)** | | **blank** | |
|---|---|---|---|---|---|---|---|---|---|
| | | BHR | BHR | AHR | AHR | BHR | AHR | BHR | AHR |
| Elektrische | | | | | | | | | |
| Stabilität bei RT | V | 290 | 290 | 280 | 200 | 330 | 270 | 490 | 390 |
| **PV** | cP | 27 | 29 | 23 | 21 | 26 | 25 | 20 | 20 |
| **YP** | lb/100 ft² | 22 | 20 | 24 | 16 | 22 | 22 | 5 | 5 |
| **Gels 10"/10'** | lb/100 ft² | 9/10 | 9/10 | 10/10 | 7/7 | 9/9 | 10/11 | 3/4 | 3/4 |

Es wurden Yieldpoint (YP) und Gelstärke (Gels) nach 10 Sekunden und 10 Minuten gemessen, wobei die erfindungsgemäßen Spülungen (4) bis (6) eine vorteilhafte Verdickung zeigten, verglichen mit der nicht additivierten Spülung.

### Beispiel 3

Es wurden Bohrspülungen untersucht, die die folgende emulgatorfreien Zusammensetzung aufwiesen, um zu prüfen, ob die Oligoglyceride der vorliegenden Anmeldung Emulgatoreigenschaften aufweisen:

| | | |
|---|---|---|
| Paraffinöl auf Basis interne Olefine | 173 | ml |
| Strukturbildner | 7 | g |
| Ca(OH)2 | 2 | g |
| Wasser | 50 | g |
| CaCl2 | 23 | g |
| CaCO3 | 35 | g |
| BaSO4 | 209 | g |

Zu dieser Spülung wurden jeweils 8 Gew.-% (a) eines Isostearat-diglycerinesters (Molverhältnis Säure zu Diglycerin 2 : 1, wie in der US 2003/0114316 beschrieben), (b) eines erfindungsgemäßen Oligoglycerin-Ölsäureesters (Molverhältnis Ölsäure zu Oligoglycerin 4 : 1) und (c) eines erfindungsgemäßen Esters aus Ölsäure und Oligoglycerin im molaren Verhältnis 84 : 16 gegeben. Gemessen wurden dann die elektrische Stabilität sowie die Filtrateigenschaften (über den HTHP-Wert).

Es zeigte sich, dass die mit den erfindungsgemäßen Estern (b) und (c) additivierten, emulgatorfreien Systeme eine schlechte elektrische Stabilität aufweisen sowie bei der Bestimmung der Filtratwerte Wasser aufgefunden wurde, was zeigt, dass die Emulgatoreigenschaften dieser Substanzklasse als schlecht zu bewerten ist. Dagegen wies der nicht-erfindungsgemäße Diglycerinesters (a) brauchbare Emulgator- aber keine Verdickereigenschaften auf.

## Patentansprüche

1. Verwendung von Oligoglycerinfettsäureester, hergestellt aus einer Säurekomponente (a), ausgewählt aus
(a1) Fettsäuren der allgemeinen Formel (I)
R-COOH (I)
in der R für einen gesättigten oder ungesättigten, verzweigten oder linearen Alkyl- oder Alkenylrest mit 7 bis 21 C-Atomen steht, und/oder
(a5) Hydroxyfettsäuren
und (b) Oligoglycerinen oder Alkoxylate von Oligoglycerinen,
als Verdicker in ölbasierten Bohrspülmitteln;
wobei die Oligoglycerinfettsäureester Tri-, Tetra-, Pentaester oder eine Mischung dieser Ester sind.

2. Verwendung nach Anspruch 1, **dadurch gekennzeichnet, dass** die Fettsäuren der Formel (I) ausgewählt sind aus ungesättigten, linearen Fettsäuren.

3. Verwendung nach mindestens einem der Ansprüche 1 bis 2, **dadurch gekennzeichnet, dass** Oligoclycerinfettsäuren ausgewählt sind, die durch Umsetzung von Oligoglycerinen der allgemeinen Formel (II) 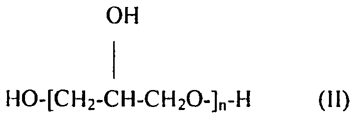 wobei n eine Zahl zwischen 2 und 10 bedeutet, mit Fettsäuremischungen, vorzugsweise Mischungen aus gesättigten und ungesättigten Fettsäuren und/oder Dicarbonsäuren und/oder Dimer- und/oder Oligomerfettsäuren hergestellt worden sind.

4. Verwendung nach mindestens einem der Ansprüche 1 bis 3, **dadurch gekennzeichnet, dass** als Fettsäure Ölsäure oder Tallölfettsäuren oder Mischungen davon ausgewählt sind.

5. Verwendung nach mindestens einem der Ansprüche 1 bis 4, **dadurch gekennzeichnet, dass** bei der Veresterung das molare Verhältnis von Fettsäuren: Oligoglycerin im Bereich von 5 : 1 bis 3 : 1 liegt.

6. Verwendung nach mindestens einem der Ansprüche 1 bis 5, **dadurch gekennzeichnet, dass** man die Oligoglycerinester als Additiv in Abmischung mit Tensiden, Kohlenwasserstoffen, Fettalkoholen, Fettsäurestern, Fettsäuren, Glycerin, Triglyceride und/oder Glykolen einsetzt.

7. Verwendung nach mindesten einem der Ansprüche 1 bis 6, **dadurch gekennzeichnet, dass** eine Mischung aus Oligoglyceriden mit Glycerin zum Einsatz kommt.

8. Verwendung nach mindestens einem der Ansprüche 1 bis 7, **dadurch gekennzeichnet, dass** die Oligoglycerinestern in Invert-Bohrspülungen, verwendet werden, vorzugsweise in solchen Invert-Bohrspülungen, die als Ölphase Paraffine enthalten, oder deren Ölphase aus Paraffinen besteht.

9. Verfahren zur Verdickung von ölbasierten Bohrspülmitteln, **dadurch gekennzeichnet, dass** man den Bohrspülmitteln Oligoglycerinester gemäß der Beschreibung im Anspruch 1 in Mengen von 0, 1 bis 10 Gew.-% zusetzt.

## Claims

1. Use of oligoglyceryl fatty acid esters prepared from an acid component (a) selected from
(a1) fatty acids of the general formula (I)
R-COOH (I)
in which R is a saturated or unsaturated, branched or linear alkyl or alkenyl residue having 7 to 21 carbon atoms,
and/or
(a5) hydroxy fatty acids
and (b) oligoglycerols or alkoxylates of oligoglycerols,
as thickeners in oil-based drilling muds;
wherein the oligoglycerol fatty acid esters are tri-, tetra-, pentaesters or a mixture of these esters.

2. Use according to Claim 1, **characterized in that** the fatty acids of the formula (I) are selected from unsaturated linear fatty acids.

3. Use according to at least one of Claims 1 and 2, **characterized in that** oligoglycerol fatty acids are selected which have been prepared by reaction of oligoglycerols of the general formula (II) 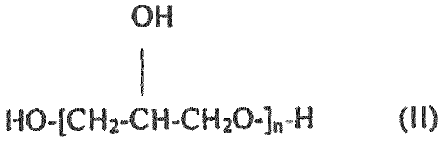 where n is a number from 2 to 10 with fatty acid mixtures, preferably mixtures of saturated and unsaturated fatty acids and/or dicarboxylic acids and/or dimer fatty acids and/or oligomer fatty acids.

4. Use according to at least one of Claims 1 to 3, **characterized in that** the fatty acids selected are oleic acid or tall oil fatty acids or mixtures thereof.

5. Use according to at least one of Claims 1 to 4, **characterized in that** the molar ratio of fatty acids: oligoglycerol in the esterification is in the range from 5:1 to 3:1.

6. Use according to at least one of Claims 1 to 5, **characterized in that** the oligoglyceryl esters are used as an additive in a blend with surfactants, hydrocarbons, fatty alcohols, fatty acid esters, fatty acids, glycerol, triglycerides and/or glycols.

7. Use according to at least one of Claims 1 to 6, **characterized in that** a mixture of oligoglycerides with glycerol is used.

8. Use according to at least one of Claims 1 to 7, **characterized in that** the oligoglyceryl esters are used in invert drilling muds, preferably in those invert drilling muds which comprise paraffins as the oil phase or wherein the oil phase consists of paraffins.

9. Method for thickening oil-based drilling muds, **characterized in that** oligoglyceryl esters as described in Claim 1 are added to the drilling muds in amounts of 0.1 to 10% by weight.

## Revendications

1. Utilisation d'esters d'acides gras avec des oligoglycérols, préparés à partir d'un composant acide (a), choisi parmi
(a1) des acides gras de formule générale (I)
R-COOH (I)
dans laquelle R représente un radical allyle ou alcényle linéaire ou ramifié, sature ou insaturé, ayant de 7 à 21 atomes de carbone,
et/ou
(a5) des acides gras hydroxylés
et (b) des oligoglycérols ou des produits d'alcoxylation d'oligoglycérols,
en tant qu'épaississants dans des fluides de forage à base huileuse ;
les esters d'acides gras avec des oligoglycérols étant des tri-, tétra-, pentaesters ou un mélange de ces esters.

2. Utilisation selon la revendication 1, **caractérisée en ce que** les acides gras de formule (I) sont choisis parmi des acides gras linéaires insaturés.

3. Utilisation selon au moins l'une quelconque des revendications 1 et 2, **caractérisée en ce qu'**on choisit des acides gras avec des oligoglycérols qui ont été préparés par mise en réaction d'oligoglycérols de formule générale (II) 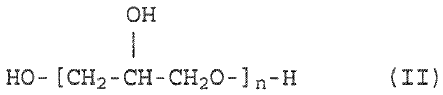 dans laquelle n représente un nombre compris entre 2 et 10, avec des mélanges d'acides gras, de préférence des mélanges d'acides gras saturés et insaturés et/ou des acides dicarboxyliques et/ou des acides gras dimères et/ou oligomères.

4. Utilisation selon au moins l'une quelconque des revendications 1 à 3, **caractérisée en ce qu'**on choisit comme acide gras l'acide oléique ou des acides gras de tallôl ou des mélanges de ceux-ci.

5. Utilisation selon au moins l'une quelconque des revendications 1 à 4, **caractérisée en ce que** dans l'estérification le rapport molaire des acides gras à l'oligoglycérol se situe dans la plage allant de 5 : 1 à 3 : 1

6. Utilisation selon au moins l'une quelconque des revendications 1 à 5, **caractérisée en ce qu'**on utilise les esters d'oligoglycérols comme additif en mélange avec des tensioactifs, des hydrocarbures, des alcools gras, des esters d'acides gras, des acides gras, du glycérol, des triglycérides et/ou des glycols.

7. Utilisation selon au moins l'une quelconque des revendications 1 à 6, **caractérisée en ce qu'**on utilise un mélange d'oligoglycérides avec du glycérol.

8. Utilisation selon au moins l'une quelconque des revendications 1 à 7, **caractérisée en ce qu'**on utilise les esters d'oligoglycérols dans des fluides de forage inverses, de préférence dans de tels fluides de forage inverses qui contiennent en tant que phase huileuse des paraffines, ou dont la phase huileuse consiste en des paraffines.

9. Procédé pour l'épaississement de fluides de forage à base huileuse, **caractérisé en ce qu'**on ajoute aux fluides de forage des d'oligoglycérols selon la description dans la revendication 1, en des quantités de 0,1 à 10 % en poids.
